# EUROPÄISCHE PATENTANMELDUNG

(11) **EP 4 424 138 A1**
(43) Veröffentlichungstag der Anmeldung: **04.09.2024**
(21) Anmeldenummer: 24152170.7
(22) Anmeldetag: 16.01.2024
(51) Int. Cl.: A01D 41/127, G06Q 50/02

(54) **ASSISTENZSYSTEM ZUR OPTIMIERUNG EINER FUTTERERNTEKETTE**

(30) Priorität: 01.03.2023 DE 102023104980
(71) Anmelder: CLAAS Saulgau GmbH, 88340 Bad Saulgau (DE)
(72) Erfinder: Mümken, Philipp, 88400 Biberach an der Riß (DE); Fischer, Josef, 88400 Biberach (DE); Reinhardt, Martin, 88367 Hohentengen (DE); Schmid, Christian, 88696 Owingen (DE); Rupp, Magnus, 73494 Rosenberg (DE); Pflanze, Sascha, 88348 Bad Saulgau (DE); Mock, Andreas, 88284 Wolpertswende (DE); Ober, Martin, 78736 Trichtingen (DE); Oldenburg, Joachim, 33428 Harsewinkel (DE); Fugunt, Michael, 88410 Bad Wurzach (DE); Thiesmann, Waldemar, 49080 Osnabrück (DE); Becker, Michael, 88367 Hohentengen (DE); Monkenbusch, Robin, 33378 Rheda-Wiedenbrück (DE)
(74) Vertreter: Budach, Steffen

(57) **Zusammenfassung**

Die Erfindung betrifft ein Assistenzsystem (32) zur Optimierung eines Futterernteprozesses (1), wobei das Assistenzsystem (32) eingerichtet ist einen Nutzer (33) bei der Optimierung einer den Futterernteprozess (1) beschreibenden landwirtschaftlichen Arbeitsaufgabe (11) zu unterstützen, wobei die Optimierung des Futterernteprozesses (1) zumindest die Planung und/oder Durchführung einer die Umsetzung der landwirtschaftlichen Arbeitsaufgabe (11) bewirkenden Futterernteprozesskette (13) umfasst, wobei die Futterernteprozesskette (13) eine Vielzahl von Prozessschritten (2) und eine Vielzahl landwirtschaftlicher Arbeitsmaschinen (31) umfasst, welche in einer vorgegebenen Reihenfolge die landwirtschaftliche Arbeitsaufgabe (11) abarbeiten, und wobei das Assistenzsystem (32) weiter eingerichtet ist nach vorgegebenen Strategien (34a..n) die Durchführung der landwirtschaftlichen Arbeitsaufgabe (11) zu optimieren, wobei die vorgegebenen Strategien (34a..n) in dem Assistenzsystem (32) hinterlegt sind und/oder an dieses übergeben werden und wobei das Assistenzsystem (32) mittels der vorgegebenen Strategien (34a..n) optimierte Arbeitsparameter (35) und optimierte Prozessschritte (2) für die Futterernteprozesskette (13) und die sie bildenden landwirtschaftlichen Arbeitsmaschinen (31) generiert.

## Beschreibung

Die Erfindung betrifft ein Assistenzsystem zur Optimierung eines Futterernteprozesses, wobei das Assistenzsystem eingerichtet ist, einen Nutzer bei der Optimierung einer den Futterernteprozess beschreibenden landwirtschaftlichen Arbeitsaufgabe zu unterstützen nach dem Oberbegriff des Anspruchs 1.

Aus der EP 3 314 997 B1 ist ein Erntemanagementsystem bekannt geworden, welches mittels geeigneter Sensoren die Feuchte eines zu erntenden Futterbestandes überwacht und in Abhängigkeit von der detektierten Gutfeuchte nachgeordnete Ernteprozessschritte regelt. Im Einzelnen ist dort offenbart, dass in Abhängigkeit von der detektierten Gutfeuchte das sogenannte Zetten oder Wenden des auf dem Feld abgelegten Erntegutes gesteuert wird. Zudem ist beschrieben, dass das geerntete Gut erst ab einer bestimmten Feuchtigkeit mittels Ballenpressen geerntet und in Ballen verpresst wird. Ein derartiges System hat zumindest den Vorteil, dass einzelne Schritte eines Futterernteprozesses in Abhängigkeit von der detektierten Gutfeuchte gesteuert werden können. Nachteilig ist, dass ein vollständiger Futterernteprozess deutlich komplexer ist und eine Regelung von einzelnen Arbeitsschritten eines Futterernteprozesses in Abhängigkeit allein von der Feuchte des zu erntenden Gutes nicht sicherstellt, dass das Erntegut eine ausreichend hohe, für die Einlagerung geeignete Erntequalität hat.

Ein ähnlicher Ansatz ist auch aus der DE 20 2019 000 311 U1 bekannt geworden, wobei dort ein zu erwartender Trockenmassegehalt in Abhängigkeit von Prozessstufen und Bearbeitungsintensitäten abgeschätzt wird. Es wird auch beschrieben, dass verschiedenste Randbedingungen bei der Abschätzung des Trockenmassegehaltes berücksichtigt werden und Solleinstellungen von Aufbereitungsorganen ermittelt und zwischen verschiedensten Arbeitsmaschinen ausgetauscht werden. Auch der DE 20 2019 000 311 U1 haftet das Problem an, dass ausschließlich die Trockenmasse, das Pendant zur Gutfeuchte, überwacht und zur Steuerung eines Futterernteprozesses genutzt wird.

Es ist deshalb Aufgabe der Erfindung die beschriebenen Nachteile des Standes der Technik zu vermeiden und insbesondere ein Assistenzsystem vorzuschlagen, welches die komplexen Zusammenhänge eines Futterernteprozesses besser berücksichtigt und sicherstellt, dass ein qualitativ hochwertiges, für die Einlagerung geeignetes und einen hohen Energiegehalt aufweisendes Erntegut erzeugt wird.

Diese Aufgabe wird erfindungsgemäß durch die kennzeichnenden Merkmale des Anspruchs 1 gelöst.

Indem ein Assistenzsystem zur Optimierung eines Futterernteprozesses eingerichtet ist einen Nutzer bei der Optimierung einer den Futterernteprozess beschreibenden landwirtschaftlichen Arbeitsaufgabe zu unterstützen, wobei die Optimierung des Futterernteprozesses zumindest die Planung und/oder Durchführung einer die Umsetzung der landwirtschaftlichen Arbeitsaufgabe bewirkenden Futterernteprozesskette umfasst, wobei die Futterernteprozesskette eine Vielzahl von Prozessschritten und eine Vielzahl landwirtschaftlicher Arbeitsmaschinen umfasst, welche in einer vorgegebenen Reihenfolge die landwirtschaftliche Arbeitsaufgabe abarbeiten und das Assistenzsystem weiter eingerichtet ist nach vorgegebenen Strategien die Durchführung der landwirtschaftlichen Arbeitsaufgabe zu optimieren, wobei die vorgegebenen Strategien in dem Assistenzsystem hinterlegt sind und/oder an dieses übergeben werden und wobei das Assistenzsystem mittels der vorgegebenen Strategien optimierte Arbeitsparameter und optimierte Prozessschritte für die Futterernteprozesskette und die sie bildenden landwirtschaftlichen Arbeitsmaschinen generiert, wird sichergestellt, dass komplexe Futterernteprozessketten optimiert werden können, sodass ein qualitativ hochwertiges, für die Einlagerung geeignetes und einen hohen Energiegehalt aufweisendes Erntegut erzeugt werden kann.

In einer vorteilhaften Ausgestaltung der Erfindung optimiert die vorgegebene Strategie Arbeitsparameter und Prozessschritte in Abhängigkeit von, den Futterernteprozess beschreibenden Qualitätsparametern, wobei die Qualitätsparameter strategieabhängig vorgegeben oder vorgebbar sind, sodass hochflexibel eine bestimmte Qualität des Erntegutes sichergestellt werden kann.

Zudem umfassen die landwirtschaftlichen Arbeitsmaschinen Arbeitsorgane, wobei die Arbeitsweise der landwirtschaftlichen Arbeitsmaschinen und der ihnen jeweils zugeordneten Arbeitsorgane durch die Arbeitsparameter beschrieben werden, sodass eine spezifische Optimierung der Qualität des Erntegutes möglich wird.

In einer vorteilhaften Weiterbildung der Erfindung umfasst das Assistenzsystem zumindest eine Bedieneinrichtung, wobei die Bedieneinrichtung von zumindest einer Eingabe- und Anzeigeeinheit und einer Speicher- und Datenverarbeitungseinheit gebildet wird und die Bedieneinrichtung einer oder mehreren der landwirtschaftlichen Arbeitsmaschinen und/oder einer stationären Einheit zugeordnet ist und ein oder mehrere der Bedieneinrichtungen eingerichtet sind untereinander Daten auszutauschen, wird sichergestellt, dass eine Vielzahl von die jeweilige Futterernteprozesskette bildenden landwirtschaftliche Arbeitsmaschinen in den zu optimierenden Futterernteprozess eingebunden werden können und zudem eine einfache Nutzung des Assistenzsystems möglich wird.

Ein qualitativ hochwertiges Optimierungsergebnis wird in einer vorteilhaften Ausgestaltung auch dadurch sichergestellt, dass die jeweilige Bedieneinrichtung Daten aus internen und/oder externen Datenquellen bezieht und das vorzugsweise zumindest die der jeweiligen Bedieneinrichtung zugeordnete Speicher- und Datenverarbeitungseinheit in Teilen oder vollständig einer Datencloud zugeordnet ist. Einerseits hat eine derartige Struktur den Vorteil, dass die Optimierung auf eine Vielzahl von Daten gestützt werden kann und andererseits wird trotz der Vielzahl verfügbarer Daten die Rechenleistung des Assistenzsystems nicht überfordert.

Um einen Futterernteprozess umfassend mittels des erfindungsgemäßen Assistenzsystems optimieren zu können ist es von Vorteil, wenn möglichst viele Prozessschritte des Futterernteprozesses und die den Futterernteprozess umsetzenden landwirtschaftlichen Arbeitsmaschinen erfasst werden, insbesondere, dass der Futterernteprozess einen oder mehrere Prozessschritte umfasst und die Prozessschritte ein oder mehrere der Prozessschritte Entscheidung Erntestart, Mähen des Erntegutes, Wenden des Erntegutes, Schwaden des Erntegutes, Schwadernte mittels Feldhäcksler, Schwadernte mittels Ballenpresse, Schwadernte mittels Ladewagen, Aufsammeln und Abtransport von Erntegutballen sowie die Einlagerung von Erntegut umfassen.

In einer vorteilhaften Ausgestaltung ist das Assistenzsystem so beschaffen, dass der zu optimierende Futterernteprozess als landwirtschaftliche Arbeitsaufgabe beschrieben wird und die Beschreibung der landwirtschaftlichen Arbeitsaufgabe die erforderlichen Prozessschritte und die Reihenfolge ihrer Abarbeitung umfasst, wobei die Reihenfolge der Abarbeitung der Prozessschritte die jeweilige Futterernteprozesskette bildet. Eine derartige Struktur hat insbesondere den Vorteil, dass die durchzuführenden Optimierungsmaßnahmen in dem Assistenzsystem auf einfache Weise abgebildet und sodann eine strukturierte Optimierung der Futterernteprozesskette umgesetzt werden kann.

Eine große Flexibilität in der Optimierung von Futterernteprozessketten ergibt sich dann, wenn das Assistenzsystem so beschaffen ist, dass es den Einsatz der unterschiedlichsten landwirtschaftlichen Arbeitsmaschinen optimieren kann, etwa den Einsatz von Mähmaschinen, vorzugsweise Mähwerken, Heuwerbungsmaschinen, vorzugsweise Heuwendern, Schwadmaschinen, vorzugsweise Schwadern, Erntemaschinen, vorzugsweise Feldhäckslern, Ballenpressen und/oder Ladewagen, Transportfahrzeugen, vorzugsweise Traktoren, Transportwagen, Pritschenwagen, Hubstaplern und Verdichtungsfahrzeugen optimieren kann.

Das Anwendungsgebiet des erfindungsgemäßen Assistenzsystems lässt sich auch dadurch weiter ausbauen, dass in einer vorteilhaften Ausgestaltung die Futterernteprozesskette Einlagerungsmedien umfasst, insbesondere Futtersilos und Erntegutballen.

Die Einsatzflexibilität des Assistenzsystems lässt sich auch dadurch weiter erhöhen, dass die in dem Assistenzsystem hinterlegten Strategien von einem Nutzer vorgegeben oder von dem Assistenzsystem vorgeschlagen werden, wobei die hinterlegten Strategien auf den jeweiligen Verwendungszweck des Erntegutes gerichtet sind.

In einer vorteilhaften Ausgestaltung der Erfindung ist das Assistenzsystem so beschaffen, dass die Verwendungszwecke der hinterlegten Strategien einen oder mehrere der Verwendungszwecke Biogasgewinnung aus erntefrischem oder siliertem Erntegut, Tierfütterung aus erntefrischem oder siliertem Erntegut, wobei die Tierfütterung insbesondere nach Rindermast und die Milchgewinnung differenziert wird, Einlagerung des Ernteguts als Heu, umfassen. Auf diese Weise wird sichergestellt, dass die Optimierung der Prozesskette anwendungsfallspezifisch so qualitätsgerecht wie notwendig und nicht wie möglich durchgeführt wird, was letztendliche Ressourcen einspart und Kosten senkt.

Eine qualitativ hochwertige Optimierung der Futterernteprozesskette in Abhängigkeit von dem Verwendungszweck des Erntegutes wird in einer vorteilhaften Ausgestaltung der Erfindung dann erreicht, wenn jede der Strategien ein oder mehrere Qualitätsparameter umfasst, wobei jeder der Qualitätsparameter das Arbeitsergebnis der jeweiligen Futterernteprozesskette definiert und ein oder mehrere der Qualitätskriterien
- Kraftstoffbedarf, vorzugsweise ein minimaler Kraftstoffbedarf,
- Durchsatz, vorzugsweise ein maximaler Durchsatz,
- Gesamtkosten, vorzugsweise minimale Gesamtkosten,
- Erntegutqualität, vorzugsweise eine maximale Erntegutqualität,
- Erntegutverlust, vorzugsweise ein minimaler Erntegutverlust,
- Energiegehalt des Erntegutes, vorzugsweise ein maximaler Energiegehalt,
- Verschmutzungsgrad, vorzugsweise ein minimaler Verschmutzungsgrad,
- Feuchte des Erntegutes, vorzugsweise eine an den Verwendungszweck angepasste optimierte Feuchte
- Erntegutertrag, vorzugsweise ein maximaler Erntegutertrag umfasst.

Die Einhaltung der optimierbaren Qualitätsparameter wird im einfachsten Fall dadurch erreicht, dass in einer vorteilhaften Weiterbildung der Erfindung Grenzwerte für die Qualitätsparameter und/oder den Qualitätsparametern zugeordnete Qualitätskriterien definiert werden und die Grenzwerte in dem Assistenzsystem hinterlegt sind oder an dieses übergeben werden.

In einer vorteilhaften Ausgestaltung der Erfindung ist der Verwendungszweck der hinterlegten Strategie auf die Verwendung des Erntegutes als erntefrisches Erntegut oder als Silage für die Biogasgewinnung gerichtet, wobei der Qualitätsparameter das Qualitätskriterium Feuchte umfasst und für die Feuchte ein Wertebereich von 55 .. 70 % vorgegeben ist, ein Arbeitsparameter die Schnittlänge des Erntegutes ist und die Schnittlänge vorzugsweise in einem Bereich von 4 ... 10 mm liegt, ein Arbeitsparameter der Schnittzeitpunkt ist und der Schnittzeitpunkt so gewählt wird, dass eine hohe Energiekonzentration im Erntegut erreicht wird, eine hohe Verdichtung des Erntegutes möglich und die Vermeidung von Fehlgärungen erreicht wird, ein Arbeitsparameter die Schnitthöhe des Mähwerks umfasst und die Schnitthöhe in einem Bereich von 50 .. 80 mm vorgeschlagen wird, wird sichergestellt, dass das Erntegut eine für die Biogasgewinnung optimale Qualität aufweist, die eine hohe Biogasausbeute ermöglicht.

In einer weiteren vorteilhaften Ausgestaltung der Erfindung ist der Verwendungszweck der hinterlegten Strategie auf die Verwendung des Erntegutes als erntefrisches Erntegut oder als Silage für die Tierfütterung gerichtet, insbesondere die Rindermast und die Milchgewinnung, wobei das Qualitätskriterium Feuchte zwischen 55 und 70 % liegt, ein Arbeitsparameter die Zugabe einer Menge Siliermittel umfasst, die die Bildung von Milchsäure fördert, ein Arbeitsparameter die Schnittlänge des Erntegutes ist und die Schnittlänge vorzugsweise in einem Bereich von 4 ... 25 mm liegt, wobei die Schnittlänge umso kürzer vorgeschlagen wird je nasser das Erntegut ist, ein Arbeitsparameter die Schnitthöhe eines Mähwerks umfasst und die Schnitthöhe in einem Bereich von 50 .. 80 mm vorgeschlagen wird, wird sichergestellt, dass das Erntegut einen hohen Energiegehalt aufweist, für Rinder leicht verdaulich ist und einen hohen Anteil an Milchsäure umfasst, sodass die Rinder entweder in der Mast einen effizienten Massezuwachs erfahren oder in der Milchgewinnung eine hohe Milchleistung erbringen. In diesem Zusammenhang ist es von Vorteil, wenn der Trockenmassegehalt des Erntegutes ermittelt wird, vorzugsweise durch Analyse des Erntegutes und die Zugabe der Menge an Siliermittel in Abhängigkeit vom Trockenmassegehalt erfolgt, wobei vorzugsweise für einen optimalen Trockenmassegehalt eine optimale Anwelkzeit ermittelt wird.

In einer weiteren vorteilhaften Ausgestaltung der Erfindung ist der Verwendungszweck der hinterlegten Strategie auf die Verwendung des Erntegutes als Heu gerichtet, wobei der Qualitätsparameter Feuchte maximal 15% beträgt, sodass sichergestellt wird, dass das Erntegut hinreichend gut verdichtet werden kann und je nachdem ob die Verdichtung in Form eines Erntegutballens oder in einem Silo erfolgt, ein Schimmeln oder Faulen des Erntegutes vermieden wird.

In einer vorteilhaften Ausgestaltung der Erfindung ist das Assistenzsystem so beschaffen, dass die Optimierung der Prozessschritte das Weglassen oder Wiederholen von Prozessschritten vorschlägt, wobei das Wiederholen oder Weglassen des Prozessschritts Wenden des Erntegutes und/oder das Weglassen des Crackens des Erntegutes im Prozessschritt Mähen umfasst, wenn zumindest das Qualitätskriterium Feuchte entweder noch nicht oder bereits in einem zulässigen Bereich liegt. Ein Weglassen von Prozessschritten findet dann statt, wenn beispielsweise die Feuchte des Erntegutes einen für eine Einlagerung zulässigen Bereich erreicht hat. Im Umkehrschluss bedeutet dies, dass beispielsweise der Prozessschritt Wenden solange wiederholt wird, bis die Feuchte des Erntegutes einen für eine Einlagerung zulässigen Bereich erreicht hat. Eine derartige Ausgestaltung hat zumindest den Vorteil, dass das Erntegut weniger mechanischen Belastungen ausgesetzt ist, was letztlich den Erntegutverlust aufgrund weniger intensiver Zerkleinerung entgegenwirkt.

In einer weiteren vorteilhaften Ausgestaltung der Erfindung kann das Assistenzsystem so strukturiert sein, dass die Optimierung der Arbeitsparameter die Optimierung der Rechhöhe in den Prozessschritten Wenden und Schwaden umfasst und die Rechhöhe umso höher vorgeschlagen wird, je schlechter das Qualitätskriterium Verschmutzungsgrad ist. Dies hat den Effekt, dass das Erntegut, aufgrund des geringeren Verschutzungsgrades einerseits besser verdaubar ist und zum anderen in der Biogasanlage effizienter in Biogas umgewandelt werden kann. Dieselben Effekte werden auch erzielt, wenn in einer weiteren vorteilhaften Ausgestaltung das Assistenzsystem so beschaffen ist, dass die Optimierung der Arbeitsparameter Schnitthöhe und Schnittzeitpunkt im Prozessschritt Mähen zumindest in Abhängigkeit von einem oder mehreren der Qualitätskriterien Verschmutzungsgrad und Feuchte erfolgt, wobei die Schnitthöhe umso höher und der Schnittzeitpunkt umso später gewählt wird je schlechter die Qualitätskriterien Verschmutzungsgrad und Feuchte sind.

In einer weiteren vorteilhaften Ausgestaltung ist das erfindungsgemäße Assistenzsystem so beschaffen, dass das Assistenzsystem eine Änderung von Qualitätsparametern und zugehörigen Qualitätskriterien einer aktivierten Strategie oder einen Wechsel einer aktivierten Strategie vorschlägt, wenn das Assistenzsystem erkennt, dass die Qualitätsparameter und/oder die jeweils zugeordneten Qualitätskriterien einer gewählten Strategie nicht erreichbar sind, insbesondere bei Maschinenausfall und/oder einer bevorstehender Schlechtwetterphase. Dies hat insbesondere den Vorteil, dass die Erntegutqualität auch bei ungünstigen Rahmenbedingungen eine Qualität aufweist, die für einen bestimmten, ggf. zu wechselnden Verwendungszweck noch akzeptable ist.

Vor dem Hintergrund, dass die Qualität des Erntegutes von jedem einzelnen Prozessschritt einer Futterernteprozesskette beeinflusst wird ist in einer weiteren vorteilhaften Ausgestaltung der Erfindung vorgesehen, dass das Assistenzsystem eingerichtet ist in Abhängigkeit von Bedingungen eines vorhergehenden Prozessschritts Art und Umfang der folgenden Prozessschritte der aktivierten Prozessstrategie zu definieren. Auf diese Weise kann erntegutqualitätsverschlechternden Randbedingungen eines vorgeordneten Prozessschritts durch angepasste Optimierung in einem nachfolgenden Prozessschritt entgegengewirkt werden. Umgekehrt ist es aber auch möglich, dass bei sehr hoher Erntegutqualität aufgrund sehr guter äußerer Bedingungen die Maßnahmen nachfolgender Prozessschritt reduziert werden können, sodass die Kosten des Gesamtprozesses sinken.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Darstellung der erfindungsgemäßen Futterernteprozesskette
- Figur 2: eine schematische Darstellung von Details des erfindungsgemäßen Assistenzsystems
- Figur 3: weitere Details des Assistenzsystems nach Figur 2

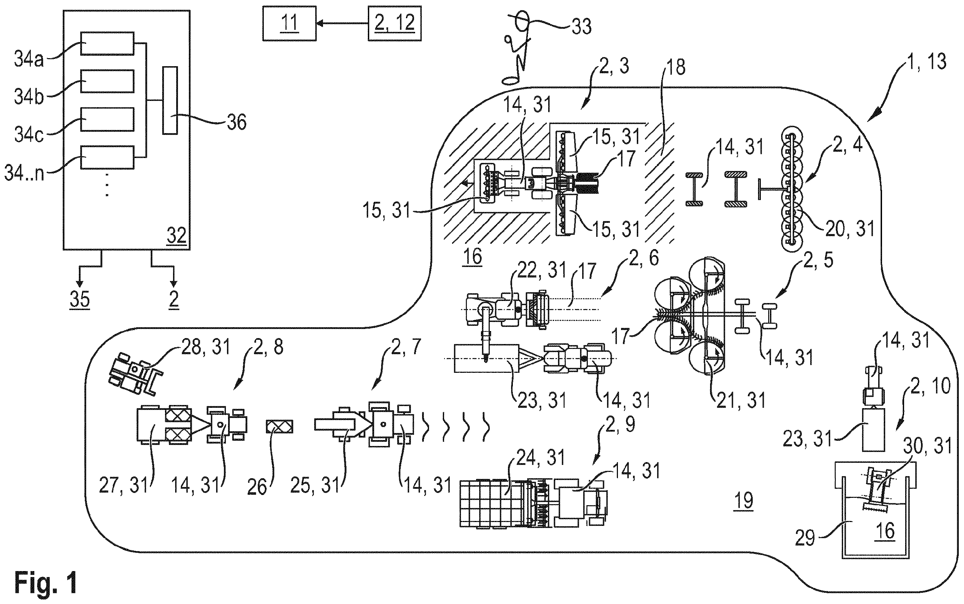

Fig. 1 zeigt schematisch einen Futterernteprozess 1, wobei der dargestellte Futterernteprozess 1 eine Vielzahl noch näher zu beschreibender Prozessschritte 2 umfasst. Im Einzelnen sind die Prozessschritte 2 Mähen 3, Wenden oder Zetten 4, Schwaden 5, Schwadernte mittels Feldhäcksler 6, Schwadernte mittels Ballenpresse 7, Aufsammeln und Abtransport der Erntegutballen 8, Schwadernte mittels Ladewagen 9 und Einlagerung 10 des Ernteguts 16 dargestellt. Aus Vereinfachungsgründen sind in Figur 1 auch alternative Prozessschritte 2 dargestellt, die sich in der Praxis wechselseitig ausschließen, etwa Schwadernte mittels Feldhäcksler 6 oder Schwadernte mittels Ballenpresse 7 oder Schwadernte mittels Ladewagen 9. Der erfindungsgemäß zu optimierende Futterernteprozess 1 wird durch die im Folgenden noch zu erläuternde landwirtschaftliche Arbeitsaufgabe 11 beschrieben und umfasst eine anwendungsfall-abhängige Auswahl von Prozessschritten 2 und die Reihenfolge ihrer Abarbeitung. Als weiterer Prozessschritt 2 kommt zudem die Entscheidung über den Erntestart 12 des Futterernteprozesses 1 in Betracht. Die die jeweilige landwirtschaftliche Arbeitsaufgabe 11 beschreibenden Prozessschritte 2 werden nachfolgend als Futterernteprozesskette 13 bezeichnet.

Im dargestellten Ausführungsbeispiel nach Figur 1 wird der Prozessschritt 2 Mähen 3 von einem Traktor 14 mit Front- und Seitenmähwerken 15 realisiert, wobei das Erntegut 16 in einem einzigen Erntegutschwad 17 abgelegt wird. Es liegt im Rahmen der Erfindung, dass das dreiteilige Mähwerk 15 auch nur als ein- oder zweiteiliges Mähwerk 15 ausgeführt ist und mehrere Erntegutschwaden 17 bilden kann. Zudem kann das Erntegut 16 im Prozessschritt 2 Mähen 3 auch in Breitablage 18 auf dem Feldboden 19 abgelegt werden.

Der Prozessschritt 2 Wenden oder Zetten 4 wird mittels einer von einem Traktor 14 gezogenen oder auf diesem aufgesattelten Heuwerbungsmaschine 20, auch als Wender oder Zetter bezeichnet, umgesetzt und ist dem Prozessschritt 2 Mähen 3 nachgeordnet, wobei in diesem Fall im Prozessschritt 2 Mähen 3 das Erntegut 16 in Breitablage 18 abgelegt wird. Der Prozessschritt 2 Wenden oder Zetten 4 wird in Abhängigkeit von der Feuchte des in Breitablage 18 abgelegten Erntegutes 16 ein oder mehrmals durchgeführt.

Wurde das Erntegut 16 in Breitablage 18 auf dem Feldboden 19 abgelegt umfasst die Futterernteprozesskette 13 den Prozessschritt 2 Schwaden 5. Im hier dargestellten Ausführungsbeispiel wird der Prozessschritt 2 Schwaden 5 von einem Traktor 14 - Schwader 21 - Gespann realisiert, wobei der Schwader 21 als Vierkreiselschwader ausgeführt ist und das Erntegut 16 in einem einzigen Erntegutschwad 17 ablegt. Denkbar ist hier aber auch der Einsatz von Ein- oder Mehrkreiselschwadern, welche das Erntegut 16 in einem oder mehreren Erntegutschwaden 17 auf dem Feldboden 19 ablegen.

In einer ersten Ausgestaltung wird der Erntegutschwad 17 von einem Feldhäcksler 22 aufgenommen, in an sich bekannter Weise zerkleinert und an einen von einem Traktor 14 gezogenen Transportwagen 23 übergeben. Alternativ kann der Erntegutschwad 17 von einem von einem Traktor 14 gezogenen Ladewagen 24 aufgenommen werden. Ladewagen 24 sind in der Regel mit einer als Pickup ausgeführten Aufsammeleinrichtung ausgestattet, können je nach Ausstattung eine Zerkleinerung des aufgenommenen Ernteguts 16 vornehmen und dieses sodann in gewissem Umfang vorverdichtet an den eigentlichen Transportbehälter übergeben. Eine weiter Alternative kann die Aufnahme des Erntegutschwades 17 durch eine von einem Traktor 14 gezogene Ballenpresse 25, hier vorzugsweise als sogenannte Quaderballenpresse ausgeführte Ballenpresse 25, sein, wobei das Erntegut 16 sodann als Erntegutballen 26 auf dem Feldboden 19 abgelegt wird. An diesen Prozessschritt 2 schließt sich in der Regel der Prozessschritt 2 Aufsammeln und Abtransport der Erntegutballen 8 an, wobei hier in der Regel von Traktoren 14 gezogene Pritschenwagen 27 und Hubstapler 28, etwa Traktoren 14 mit Frontlader oder sogenannte Teleskoplader, zum Aufnehmen und überladen der Erntegutballen 26 zum Einsatz kommen.

Der Prozessschritt 2 Einlagerung des Erntegutes 10 kann einerseits die Einlagerung der Erntegutballen 26 umfassen. Andererseits kann das etwa von einem Transportwagen 23 oder einem Ladewagen 24 aufgenommene Erntegut 16 in einem Silo 29 eingelagert werden, wobei im dargestellten Ausführungsbeispiel ein Flachsilo gezeigt ist. Die Einlagerung 10 des Erntegutes 16 in einem Flachsilo erfolgt in der Regel in der Weise, dass der Traktor 14 gezogene Lade- oder Transportwagen 23, 24 das Erntegut 16 in das Silo 29 abgibt und dort ein Verdichtungsfahrzeug 30 das Erntegut 16 in an sich bekannter Weise durch mehrmaliges Überrollen und Zusammenschieben verdichtet.

Der jeweilige Traktor 14, das Mähwerk 15, die Heuwerbungsmaschine 20, der Schwader 21, der Feldhäcksler 22, der Transportwagen 23, der Ladewagen 24, die Ballenpresse 25, der Pritschenwagen 27, der Hubstapler 28 und das Verdichtungsfahrzeug 30 bilden die landwirtschaftlichen Arbeitsmaschinen 31 des zu optimierenden Futterernteprozesses 1 und die ihn beschreibende Futterernteprozesskette 13. Es liegt im Rahmen der Erfindung, dass jeder der landwirtschaftlichen Arbeitsmaschinen 31 selbstfahrend ausgeführt sein kann, wobei es auch im Rahmen der Erfindung liegt, dass die landwirtschaftlichen Arbeitsmaschinen 31 autonom, d.h. ohne Fahrer, den jeweiligen Prozessschritt 2 realisieren können.

Der Futterernteprozess 1 setzt sich folglich aus dem Zusammenspiel des zu erntenden Erntegutes 16 mit den die Futterernteprozesskette 13 bildenden Prozessschritten 2 und den jeweils diesen zugeordneten erforderlichen landwirtschaftlichen Arbeitsmaschinen 31 zusammen. Die landwirtschaftlichen Arbeitsmaschinen 31 umfassen hier noch nicht näher beschriebene Arbeitsorgane. Die Arbeitsweise der landwirtschaftlichen Arbeitsmaschinen 31 und der ihnen jeweils zugeordneten Arbeitsorgane können durch Änderung ihnen jeweils zugeordneter und noch zu beschreibender Arbeitsparameter 35 gesteuert werden.

Der Futterernteprozess 1 wird in erfindungsgemäßer Weise mittels eines noch detailliert zu beschreibenden Assistenzsystems 32 optimiert, wobei das Assistenzsystem 32 eingerichtet ist einen Nutzer 33 bei der Optimierung der den Futterernteprozess 1 beschreibenden landwirtschaftlichen Arbeitsaufgabe 11 zu unterstützen, wobei die Optimierung des Futterernteprozesses 1 zumindest die Planung und/oder Durchführung der die Umsetzung der landwirtschaftlichen Arbeitsaufgabe 11 bewirkenden Futterernteprozesskette 13 umfasst, wobei die Futterernteprozesskette 13, wie beschrieben, eine Vielzahl von Prozessschritten 2 und eine Vielzahl landwirtschaftlicher Arbeitsmaschinen 31 umfasst, welche in einer vorgegebenen Reihenfolge die landwirtschaftliche Arbeitsaufgabe 11 abarbeiten. Erfindungsgemäß ist das Assistenzsystem 32 weiter eingerichtet nach vorgegebenen Strategien 34a..n die Durchführung der landwirtschaftlichen Arbeitsaufgabe 11 zu optimieren, wobei die vorgegebenen Strategien 34a..n in dem Assistenzsystem 32 hinterlegt sind und/oder an dieses übergeben werden und wobei das Assistenzsystem 32 mittels der vorgegebenen Strategien 34a..n optimierte Arbeitsparameter 35 und optimierte Prozessschritte 2 für die Futterernteprozesskette 13 und die sie bildenden landwirtschaftlichen Arbeitsmaschinen 31 generiert. Dabei sind die jeweils vorgegebenen Strategien 34a..n so strukturiert, dass sie die optimierten Arbeitsparameter 35 und die optimierten Prozessschritte 2 in Abhängigkeit von den Futterernteprozess 1 beschreibenden und später noch näher erläuterten Qualitätsparametern 36 ermitteln und die Qualitätsparameter 36 strategieabhängig vorgegeben oder vorgebbar sind. Vorgegeben können besagte Qualitätsparameter 36 dadurch sein, dass jeder Strategie 34a..n ganz bestimmte Qualitätsparameter 36 zugeordnet sind. Vorgebbar können besagte Qualitätsparameter 36 auch dadurch sein, dass beispielsweise ein Nutzer 33 für eine bestimmte Strategie 34a..n ganz bestimmte Qualitätsparameter 36 festlegen kann.

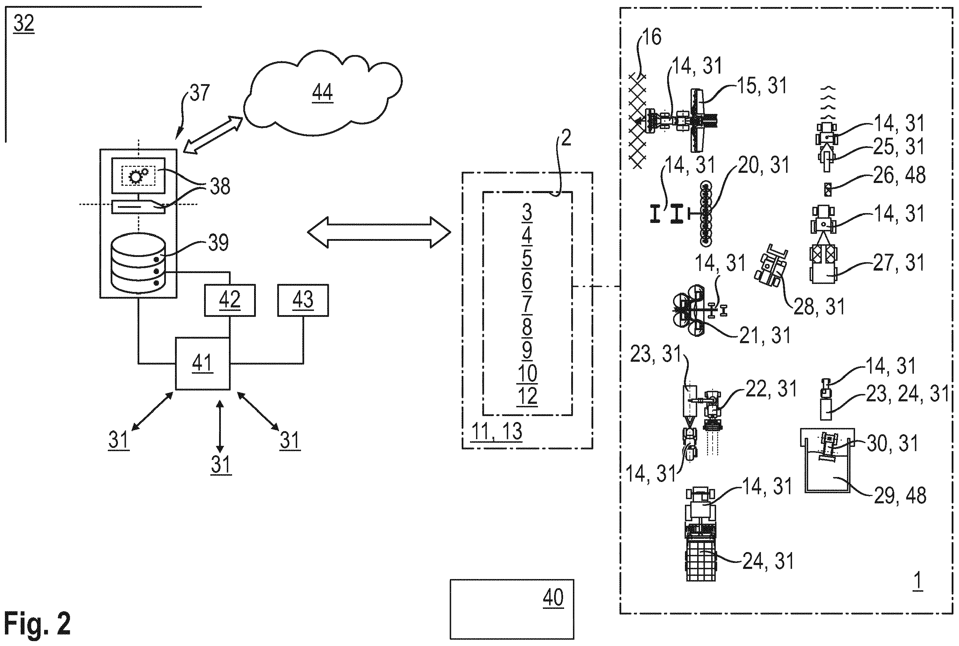

Figur 2 beschreibt nun Details des erfindungsgemäßen Assistenzsystems 32 näher. Das Assistenzsystem 32 umfasst zumindest eine Bedieneinrichtung 37, wobei die Bedieneinrichtung 37 von zumindest einer Eingabe- und Anzeigeeinheit 38 und einer Speicher- und Datenverarbeitungseinheit 39 gebildet wird. Die Bedieneinrichtung 37 kann einer oder mehreren der den Futterernteprozess 1 beschreibenden landwirtschaftlichen Arbeitsmaschinen 31 und/oder einer stationären Einheit 40 zugeordnet sein, wobei eine oder mehrere der Bedieneinrichtungen 37 eingerichtet sind untereinander Daten 41 auszutauschen. Die jeweilige Bedieneinrichtung 37 ist zudem so eingerichtet, dass sie Daten 41 aus einer der Speicher-und Datenverarbeitungseinrichtung 39 zugeordneten internen Datenquelle 42 und/oder einer oder mehreren externen Datenquellen 43 bezieht. In einer vorteilhaften Ausgestaltung kann die der jeweiligen Bedieneinrichtung 37 zugeordnete Speicher- und Datenverarbeitungseinheit 39 in Teilen oder vollständig einer Datencloud 44 zugeordnet sein. Wie bereits beschrieben umfasst der Futterernteprozess 1 einen oder mehrere Prozessschritte 2, wobei die Prozessschritte 2 ein oder mehrere der Prozessschritte 2 Entscheidung Erntestart 12, Mähen 3 des Erntegutes 16, Wenden 4 des Erntegutes 16, Schwaden 5 des Erntegutes 16, Schwadernte mittels Feldhäcksler 6, Schwadernte mittels Ballenpresse 7, Schwadernte mittels Ladewagen 9, Aufsammeln und Abtransport von Erntegutballen 8 sowie die Einlagerung 10 von Erntegut 16 umfassen.

Der zu optimierende Futterernteprozess 1 wird schließlich wie bereits erläutert als landwirtschaftliche Arbeitsaufgabe 11 beschrieben, wobei die Beschreibung der landwirtschaftliche Arbeitsaufgabe 11 die erforderlichen Prozessschritte 2 und die Reihenfolge ihrer Abarbeitung umfasst. Die Reihenfolge der Abarbeitung der Prozessschritte 2 bildet zugleich die jeweilige Futterernteprozesskette 13. Je nach Art des zu optimierenden Futterernteprozesses 1 umfasst die die jeweilige landwirtschaftliche Arbeitsaufgabe 11 definierende Futterernteprozesskette 13 eine Vielzahl von landwirtschaftlichen Arbeitsmaschinen 31, etwa Mähwerke 15, Heuwerbungsmaschinen 20, vorzugsweise Heuwender, Schwader 21, Erntemaschinen, vorzugsweise Feldhäcksler 22, Ballenpresse 25 und/oder Ladewagen 24, Transportfahrzeuge, vorzugsweise Traktoren 14, Transportwagen 23, Pritschenwagen 27, Hubstapler 28 und Verdichtungsfahrzeuge 30. Zudem umfasst die Futterernteprozesskette 13 die Einlagerung 10 des Erntegutes 16, wobei die Einlagerung 48 in Form von Erntegutballen 26 oder die Einlagerung 48 in Silos 29 erfolgen kann. Nachfolgend werden Erntegutballen 26 und Silos 29 gemeinschaftlich als Einlagerungsmedien bezeichnet.

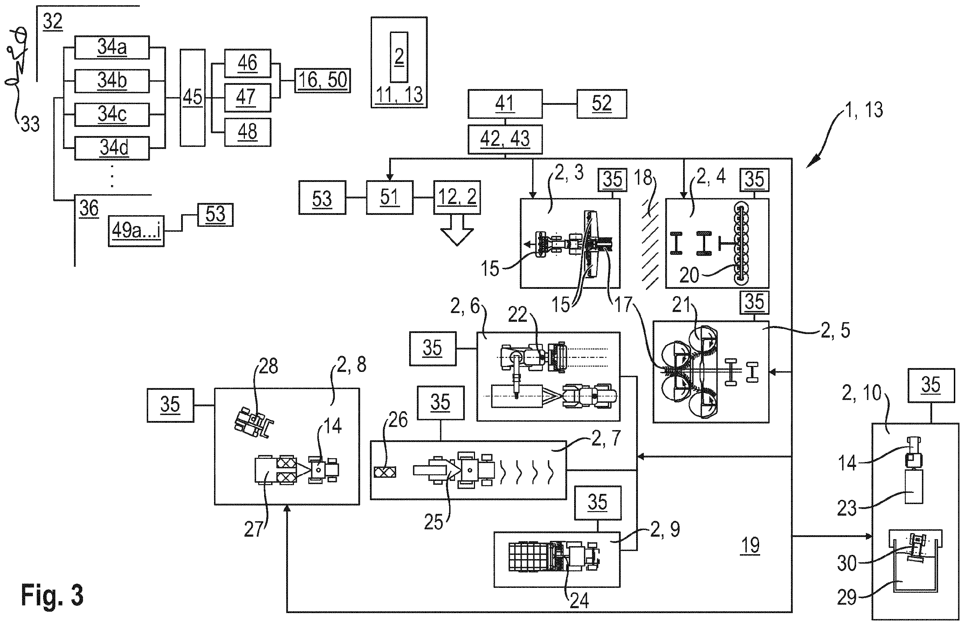

Gemäß Figur 3 werden die in dem Assistenzsystem 32 hinterlegten Strategien 34a..n von einem Nutzer 33 vorgegeben oder von dem Assistenzsystem 32 vorgeschlagen, wobei erfindungsgemäß die hinterlegten Strategien 34a..n auf den jeweiligen Verwendungszweck 45 des Erntegutes 16 gerichtet sind. Vorzugsweise umfassen die hinterlegten Strategien 34a.n typische Verwendungszwecke 45, wie die Verwendung des Erntegutes 16 zur
- Biogasgewinnung 46 aus erntefrischem oder siliertem Erntegut 16
- Tierfütterung 47 aus erntefrischem oder siliertem Erntegut 16, wobei die Tierfütterung 47 insbesondere die Rindermast und die Milchgewinnung umfasst
- Einlagerung 10 des Ernteguts 16 als Heu.

Weiter umfasst jeder der vorgebbaren Strategien 34a..n ein oder mehrere Qualitätsparameter 36, wobei jeder der Qualitätsparameter 36 das Arbeitsergebnis der jeweiligen Futterernteprozesskette 13 definiert und ein oder mehrere der Qualitätskriterien 49
- Kraftstoffbedarf 49a, vorzugsweise ein minimaler Kraftstoffbedarf,
- Durchsatz 49b, vorzugsweise ein maximaler Durchsatz,
- Gesamtkosten 49c, vorzugsweise minimale Gesamtkosten,
- Erntegutqualität 49d, vorzugsweise eine maximale Erntegutqualität,
- Erntegutverlust 49e, vorzugsweise ein minimaler Erntegutverlust,
- Energiegehalt 49f des Erntegutes 16, vorzugsweise ein maximaler Energiegehalt,
- Verschmutzungsgrad 49g, vorzugsweise ein minimaler Verschmutzungsgrad,
- die Feuchte 49h des Erntegutes 16, vorzugsweise eine an den Verwendungszweck 45 angepasste optimierte Feuchte
- Erntegutertrag (49i), vorzugsweise ein maximaler Erntegutertrag
umfasst.

Gemäß Figur 3 kann ein typischer Futterernteprozess 1 so strukturiert sein, dass von dem Assistenzsystem 32 zunächst ein optimaler Zeitpunkt für den Erntestart 12 bestimmt wird, wobei der Erntestart 12 den ersten, die jeweilige Futterernteprozesskette 13 definierende Prozessschritt 2 bildet. Der Erntestart 12 kann von einer Vielzahl von an sich bekannten Entscheidungskriterien 51 abhängen, wobei typische Entscheidungskriterien 51 Wetterdaten, eine geeignete Uhrzeit für den Erntebeginn, das Wachstumsstadium des Erntegutes 16, die Zusammensetzung des Erntegutes 16, die Höhenlage in der das Erntegut 16 geerntet werden soll, gegebenenfalls die Bodenfeuchte und ganz wesentlich die Feuchte des Erntegutes 16 selbst sein können. Die Entscheidungskriterien 51 werden aus Daten 41 ermittelt, die das Assistenzsystem 32 aus internen oder externen Datenquellen 42, 43 bezieht. Es liegt im Rahmen der Erfindung, dass die Daten 41 zudem von an sich bekannten und hier nicht näher beschriebenen Sensorsystemen 52 ermittelt werden können. Das Assistenzsystem 32 analysiert die bezogenen Daten 41 gemäß den Einsatzfall-abhängig definierten Entscheidungskriterien 51 und schlägt als Ergebnis den Zeitpunkt des Erntestarts 12 vor. Im einfachsten Fall sind in dem Assistenzsystem 32 Grenzwerte 53 für die Entscheidungskriterien 51 hinterlegt.

Der eigentliche Prozess des Erntens beginnt mit dem Prozessschritt 2 Mähen 3. Je nach Anzahl und Ausstattungsgrad der zum Einsatz kommenden Mähwerke 15 können die Arbeitsparameter 35 ein oder mehrere der Arbeitsparameter 35 Schnitthöhe, die Entscheidung, ob ein Aufbereiter zum Einsatz kommen soll oder nicht, die Drehzahl der rotierend angetriebenen Mähmesser und die Drehzahl des Aufbereiters, der Klingenzustand der Mähmesser, der Auflagedruck der Mähwerke 15 auf den Feldboden 19 umfassen. Jeder dieser Arbeitsparameter 35 beeinflusst die zuvor beschriebenen Qualitätsparameter 36 des Erntegutes 16. So kann beispielsweise eine zu niedrige Schnitthöhe dazu führen, dass das Qualitätskriterium Verschmutzungsgrad 49g über einem zulässigen Grenzwert 53 liegt. Die Arbeitsparameter 35 werden aus Daten 41 ermittelt, die das Assistenzsystem 32 aus internen oder externen Datenquellen 42, 43 bezieht. Es liegt im Rahmen der Erfindung, dass die Daten 41 zudem von an sich bekannten und hier nicht näher beschriebenen Sensorsystemen 52, welche dem jeweiligen Mähwerk 15 zugeordnet sein können, ermittelt werden. Das Assistenzsystem 32 analysiert die bezogenen Daten 41 gemäß den Einsatzfall-abhängig definierten Qualitätsparametern 36 und schlägt als Ergebnis optimierte Arbeitsparameter 35 für den Prozessschritt 2 Mähen 3 vor. Im einfachsten Fall sind in dem Assistenzsystem 32 Grenzwerte 53 für die Qualitätsparameter 36 hinterlegt.

Wie bereits beschrieben können die Mähwerke 15 das Erntegut 16 in einem oder mehreren Erntegutschwaden 17 oder in Breitablage 18 auf dem Feldboden 19 ablegen. Bei Breitablage 18 kann sich als nächster Proessschritt 2 das Wenden 4 anschließen. Dabei wird das Erntegut 16 aufgewirbelt und wieder in Breitablage 18 abgelegt, sodass das Erntegut 16 mehr oder weniger gleichmäßig Wind und Sonne ausgesetzt wird, um die Trocknung des Erntegutes 16 zu beschleunigen.

Die Arbeitsparameter 35 der zum Einsatz kommenden Heuwerbungsmaschinen 20 können ein oder mehrere der Arbeitsparameter 35 Trockenzeit, Rechhöhe, Streuwinkel, Fahrroute und Fahrgeschwindigkeit sein. Zudem können Umwelteinflüsse, wie etwa die Bodenfeuchte, die Windgeschwindigkeit und die Luftfeuchte berücksichtigt werden. So kann beispielsweise eine zu niedrige Rechhöhe dazu führen, dass das Qualitätskriterium Verschmutzungsgrad 49g über einem zulässigen Grenzwert 53 liegt. Die Arbeitsparameter 35 werden aus Daten 41 ermittelt, die das Assistenzsystem 32 aus internen oder externen Datenquellen 42, 43 bezieht. Es liegt im Rahmen der Erfindung, dass die Daten 41 zudem von an sich bekannten und hier nicht näher beschriebenen Sensorsystemen 52, welche der jeweiligen Heuwerbungsmaschine 20 zugeordnet sein können, ermittelt werden. Das Assistenzsystem 32 analysiert die bezogenen Daten 41 gemäß den Einsatzfall-abhängig definierten Qualitätsparametern 36 und schlägt als Ergebnis optimierte Arbeitsparameter 35 für den Prozessschritt 2 Wenden 4 vor. Im einfachsten Fall sind in dem Assistenzsystem 32 Grenzwerte 53 für die Qualitätsparameter 36 hinterlegt. Aufgrund dessen, dass das Wenden 4 dem alleinigen Zweck einer Trocknungsbeschleunigung des Erntegutes 16 dient, kann ein Arbeitsparameter 35 hier auch die Anzahl der Wiederholungen des Prozessschritts 2 Wenden 4 oder das völlige Weglassen dieses Prozessschritts 2 umfassen.

Wird das Erntegut 16 in Breitablage 18 auf dem Feldboden 19 abgelegt muss sich als weitere Prozesschritt 2 das Schwaden 5 anschließen. Wie bereits beschrieben hängt es von der Art des Schaders 21 ab, ob ein oder mehrere Erntegutschwaden 17 auf dem Feldboden 19 abgelegt werden. Die ein oder mehreren Arbeitsparameter 35 des jeweils eingesetzten Schwaders 21 können die Trockenzeit, die Rechhöhe, die Neigung des jeweiligen Schwadkreisels, die Fahrroute und die Fahrgeschwindigkeit sein. Zudem können Umwelteinflüsse, wie etwa die Bodenfeuchte, die Windgeschwindigkeit und die Luftfeuchte berücksichtigt werden. So kann beispielsweise auch beim Schwaden 5 eine zu niedrige Rechhöhe dazu führen, dass das Qualitätskriterium Verschmutzungsgrad 49g über einem zulässigen Grenzwert 53 liegt. Die Arbeitsparameter 35 werden aus Daten 41 ermittelt, die das Assistenzsystem 32 aus internen oder externen Datenquellen 42, 43 bezieht. Es liegt im Rahmen der Erfindung, dass die Daten 41 zudem von an sich bekannten und hier nicht näher beschriebenen Sensorsystemen 52, welche dem jeweiligen Schwader 21 zugeordnet sein können, ermittelt werden. Das Assistenzsystem 32 analysiert die bezogenen Daten 41 gemäß den Einsatzfall-abhängig definierten Qualitätsparametern 36 und schlägt als Ergebnis optimierte Arbeitsparameter 35 für den Prozessschritt 2 Schaden 5 vor. Im einfachsten Fall sind in dem Assistenzsystem 32 Grenzwerte 53 für die Qualitätsparameter 36 hinterlegt.

Unabhängig davon, auf welche Weise das Erntegut 16 zu einem Erntegutschwad 17 geformt wurde erfolgt schließlich dessen Ernte, wobei hier die Prozessschritte 2 Schwadernte mittels Feldhäcksler 6, Schwadernte mittels Ballenpresse 7 und Schwadernte mittels Ladewagen 9 unterschieden werden. Allen drei Ernteprozesschritten 2 ist gemeinsam, dass die Arbeitsparameter 35 aus Daten 41 ermittelt werden, die das Assistenzsystem 32 aus internen oder externen Datenquellen 42, 43 bezieht. Es liegt auch hier im Rahmen der Erfindung, dass die Daten 41 zudem von an sich bekannten und hier nicht näher beschriebenen Sensorsystemen 52, welche dem jeweiligen Feldhäcksler 22 und zugehörigem Traktor - Transportwagen - Gespann 14, 23, der jeweiligen Ballenpresse 25 oder dem jeweiligen Ladewagen 24 zugeordnet sein können, ermittelt werden. Das Assistenzsystem 32 analysiert die bezogenen Daten 41 gemäß den Einsatzfall-abhängig definierten Qualitätsparametern 36 und schlägt als Ergebnis optimierte Arbeitsparameter 35 für die Prozessschritte 2 Schwadernte mittels Feldhäcksler 6, Schwadernte mittels Ballenpresse 7 und Schwadernte mittels Ladewagen 9 vor. Im einfachsten Fall sind in dem Assistenzsystem 32 Grenzwerte 53 für die Qualitätsparameter 36 hinterlegt. Die ein oder mehreren Arbeitsparameter 35 können bei Schwadernte mittels Feldhäcksler 6 beispielsweise die Fahrtroute, die Häcksellänge, der Zerkleinerungsgrad des Erntegutes 16 und die Menge an einzubringendem Siliermittel sein. Bei Schwadernte mittels Ballenpresse 7 können die ein oder mehreren Arbeitsparameter 35 beispielsweise die Ballengröße, die Ballendichte, die Menge an einzubringendem Siliermittel und der Ablageort der Erntegutballen 26 sein. Bei Schwadernte mittels Ladewagen 9 können die ein oder mehreren Arbeitsparameter 35 in Analogie zum Feldhäcksler 22 die Fahrtroute, die Häcksellänge, der Zerkleinerungsgrad des Erntegutes 16 und die Menge an einzubringendem Siliermittel sein.

An den Prozessschritt 2 Schwadernte mittels Ballenpresse 7 schließt sich der Prozessschritt 2 Aufsammeln und Abtransport der Erntegutballen 8 an. Hier beschränken sich die Arbeitsparameter 35 im Wesentlichen auf ein optimiertes Überfahren des Feldbodens 19, um mit möglichst wenig Überrollungen die Erntegutballen 26 aufzusammeln. Aber auch in diesem Prozessschritt 2 ist es so, dass die Arbeitsparameter 35 aus Daten 41 ermittelt werden, die das Assistenzsystem 32 aus internen oder externen Datenquellen 42, 43 bezieht. Es liegt auch hier im Rahmen der Erfindung, dass die Daten 41 zudem von an sich bekannten und hier nicht näher beschriebenen Sensorsystemen 52, welche den dem jeweiligen Hubstabler 28 und zugehörigem Traktor - Pritschenwagen - Gespann 14, 27 zugeordnet sein können, ermittelt werden. Das Assistenzsystem 32 analysiert die bezogenen Daten 41 gemäß den Einsatzfall-abhängig definierten Qualitätsparametern 36 und schlägt als Ergebnis optimierte Arbeitsparameter 35 für den Prozessschritte 2 Aufsammeln und Abtransport der Erntegutballen 8 vor. Im einfachsten Fall sind in dem Assistenzsystem 32 Grenzwerte 53 für die Qualitätsparameter 36 hinterlegt.

Ein weiterer Prozessschritt 2 der erfindungsgemäßen Futterernteprozesskette 13 kann die Einlagerung 10 des Erntegutes 16 in einem Silo 29 sein. Hier beschränken sich die Arbeitsparameter 35 im Wesentlichen auf ein optimiertes Verdichten des Erntegutes 16 in dem Silo 29. Aber auch in diesem Prozessschritt 2 ist es so, dass die Arbeitsparameter 35 aus Daten 41 ermittelt werden, die das Assistenzsystem 32 aus internen oder externen Datenquellen 42, 43 bezieht. Es liegt auch hier im Rahmen der Erfindung, dass die Daten 41 zudem von an sich bekannten und hier nicht näher beschriebenen Sensorsystemen 52, welche den dem jeweiligen Verdichtungsfahrzeug 30 und zugehörigem Traktor - Transportwagen - Gespann 14, 23 zugeordnet sein können, ermittelt werden. Das Assistenzsystem 32 analysiert die bezogenen Daten 41 gemäß den Einsatzfall-abhängig definierten Qualitätsparametern 36 und schlägt als Ergebnis optimierte Arbeitsparameter 35 für den Prozessschritte 2 Einlagerung 10 des Erntegutes 16 vor. Im einfachsten Fall sind in dem Assistenzsystem 32 Grenzwerte 53 für die Qualitätsparameter 36 hinterlegt.

Das Assistenzsystem 32 ist zudem so beschaffen, dass Grenzwerte 53 für die Qualitätsparameter 36 und/oder die den Qualitätsparametern 36 zugeordneten Qualitätskriterien 49 definiert werden und die Grenzwerte 53 in dem Assistenzsystem 32 hinterlegt sind oder an dieses übergeben werden.

Ist nun der Verwendungszweck 45 der hinterlegten Strategie 34a..n auf die Verwendung des Erntegutes 16 als erntefrisches Erntegut 16 oder als Silage 50 für die Biogasgewinnung 46 gerichtet kann ein Qualitätsparameter 36 das Qualitätskriterium Feuchte 49h umfassen, wobei für die Feuchte 49h ein Wertebereich von 55 ... 70 % vorgegeben ist, sodass das Erntegut 16 einen für die Vergärung optimalen Trockenmassegehalt von 30 bis 45% aufweist. Weiter kann ein Arbeitsparameter 35 die Schnittlänge des Erntegutes 16 sein, wobei die Schnittlänge vorzugsweise in einem Bereich von 4 ... 10 mm liegen sollte, da bei diesen Schnittlängen eine optimale bakterielle Umsetzung des Erntegutes 16 in Biogas sichergestellt wird. Zudem ergibt sich bei diesen Schnittlängen eine homogene Substratmenge. Ein weiterer Arbeitsparameter (35) kann in diesem Zusammenhang der Schnittzeitpunkt sein, wobei der Schnittzeitpunkt so gewählt wird, dass eine hohe Energiekonzentration im Erntegut 16 sichergestellt wird, eine hohe Verdichtung des Erntegutes 16 möglich und die Vermeidung von Fehlgärungen erreicht wird. Zudem kann ein Arbeitsparameter 35 die Schnitthöhe eines Mähwerks 15 umfassen, wobei die Schnitthöhe in einem Bereich von 50...80 mm vorgeschlagen wird, sodass ein niedriger Verschmutzungsgrad des Erntegutes 16 sichergestellt und zugleich das Beschädigen der Grasnarbe vermieden wird.

Ist der Verwendungszwecke 45 der hinterlegten Strategie 34a..n auf die Verwendung des Erntegutes 16 als erntefrisches Erntegut 16 oder als Silage 50 für die Tierfütterung 47 gerichtet, insbesondere die Rindermast und die Milchgewinnung, umfasst der Qualitätsparameter 36 das Qualitätskriterium Feuchte 49h und wobei für die Feuchte 49h ein Wertebereich von 55 .. 70 % vorgegeben ist, ein Arbeitsparameter 35 die Zugabe einer Menge Siliermittel umfasst, die die Bildung von Milchsäure fördert, ein Arbeitsparameter (35) die Schnittlänge des Erntegutes 16 ist und die Schnittlänge vorzugsweise in einem Bereich von 4 ... 25 mm liegt, wobei die Schnittlänge umso kürzer vorgeschlagen wird je trockener das Erntegut 16 ist, ein Arbeitsparameter 35 die Schnitthöhe eines Mähwerks 15 umfasst und die Schnitthöhe in einem Bereich von 50..80 mm vorgeschlagen wird. In diesem Zusammenhang ist es von Vorteil, wenn der Trockenmassegehalt des Erntegutes 16 ermittelt wird, vorzugsweise durch Analyse des Erntegutes 16 und die Zugabe der Menge an Siliermittel in Abhängigkeit vom Trockenmassegehalt erfolgt, wobei vorzugsweise für einen optimalen Trockenmassegehalt eine optimale Anwelkzeit ermittelt wird.

Ist der Verwendungszwecke 45 der hinterlegten Strategie 34a..n auf die Verwendung des Erntegutes 16 als Heu gerichtet umfasst der Qualitätsparameter 36 das Qualitätskriterium Feuchte 49h und wobei für die Feuchte 49h ein Maximalwert von 15% vorgegeben ist.

Zudem kann das Assistenzsystem 32 so strukturiert sein, dass es im Zuge der Optimierung der durchzuführenden Prozessschritte 2 das Weglassen oder Wiederholen von Prozessschritten 2 vorschlägt, etwa das Wiederholen oder Weglassen des Prozessschritts 2 Wenden 4 des Erntegutes 16 und/oder das Weglassen des Crackens des Erntegutes 16 im Prozessschritt 2 Mähen 3 umfasst, wenn zumindest das Qualitätskriterium Feuchte 49h entweder noch nicht oder bereits in einem zulässigen Bereich liegt.

Wie bereits beschrieben wird der Verschmutzungsgrad des Erntegutes 16 insbesondere dadurch niedrig gehalten, wenn die Optimierung der Arbeitsparameter 35 die Optimierung der Rechhöhe in den Prozessschritten 2 Wenden 4 und Schwaden 5 umfasst und die Rechhöhe umso höher vorgeschlagen wird, je schlechter das Qualitätskriterium Verschmutzungsgrad 49g ist.

Wie ebenfalls bereits beschrieben wird der Verschmutzgrad des Erntegutes 16 auch dadurch niedrig gehalten, dass die Optimierung der Arbeitsparameter 35 Schnitthöhe und Schnittzeitpunkt im Prozessschritt 2 Mähen 3 zumindest in Abhängigkeit von einem oder mehreren der Qualitätskriterien 49 Verschmutzungsgrad 49g und Feuchte 49h erfolgt, wobei die Schnitthöhe umso höher und der Schnittzeitpunkt umso später gewählt wird je schlechter die Qualitätskriterien 49 Verschmutzungsgrad 49g und Feuchte 49h sind.

Weiter ist das Assistenzsystem 32 so beschaffen, dass es eine Änderung von Qualitätsparametern 36 und zugehörigen Qualitätskriterien 49 einer aktivierten Strategie 34a..n oder einen Wechsel einer aktivierten Strategie 34a..n vorschlägt, wenn das Assistenzsystem 32 erkennt, dass die Qualitätsparameter 36 und/oder die jeweils zugeordneten Qualitätskriterien 49 einer gewählten Strategie 34a..n nicht erreichbar sind, insbesondere bei Maschinenausfall und/oder einer bevorstehender Schlechtwetterphase.

Zudem ist das Assistenzsystem 32 eingerichtet in Abhängigkeit von Bedingungen eines vorhergehenden Prozessschritts 2 Art und Umfang der folgenden Prozessschritte 2 der aktivierten Prozessstrategie 34a..n zu definieren.

### Bezugszeichenliste:

| | | | |
|---|---|---|---|
| 1 | Futterernteprozess | 34a..n | vorgebbare Strategie |
| 2 | Prozessschritt | 35 | Arbeitsparameter |
| 3 | Mähen | 36 | Qualitätsparameter |
| 4 | Wenden/Zetten | 37 | Bedieneinrichtung |
| 5 | Schwaden | 38 | Eingabe- und Anzeigeeinheit |
| 6 | Schwadernte mittels Feldhäcksler | 39 | Speicher- und DV-Einheit |
| 7 | Schwadernte mittels Ballenpresse | 40 | stationäre Einheit |
| 8 | Aufsammeln und Abtransport der Ballen | 41 | Daten |
| 9 | Schwadernte mittels Ladewagen | 42 | interne Datenquelle |
| 10 | Einlagerung Erntegut | 43 | externe Datenquelle |
| 11 | landwirtschaftliche Arbeitsaufgabe | 44 | Datencloud |
| 12 | Erntestart | 45 | Verwendungszweck |
| 13 | Futterernteprozesskette | 46 | Biogasgewinnung |
| 14 | Traktor | 47 | Tierfütterung |
| 15 | Mähwerk | 48 | Einlagerung |
| 16 | Erntegut | 49 | Qualitätskriterien |
| 17 | Erntegutschwad | 50 | Silage |
| 18 | Breitablage | 51 | Entscheidungskriterium |
| 19 | Feldboden | 52 | Sensorsystem |
| 20 | Heuwerbungsmaschine | 53 | Grenzwert |
| 21 | Schwader | 54 | |
| 22 | Feldhäcksler | 55 | |
| 23 | Transportwagen | 56 | |
| 24 | Ladewagen | 57 | |
| 25 | Ballenpresse | 58 | |
| 26 | Erntegutballen | 59 | |
| 27 | Pritschenwagen | 60 | |
| 28 | Hubstabler | 61 | |
| 29 | Silo | 62 | |
| 30 | Verdichtungsfahrzeug | 63 | |
| 31 | landwirtschaftliche Arbeitsmaschine | 64 | |
| 32 | Assistenzsystem | 65 | |
| 33 | Nutzer | | |

## Patentansprüche

1. Assistenzsystem (32) zur Optimierung eines Futterernteprozesses (1), wobei das Assistenzsystem (32) eingerichtet ist einen Nutzer (33) bei der Optimierung einer den Futterernteprozess (1) beschreibenden landwirtschaftlichen Arbeitsaufgabe (11) zu unterstützen, wobei die Optimierung des Futterernteprozesses (1) zumindest die Planung und/oder Durchführung einer die Umsetzung der landwirtschaftlichen Arbeitsaufgabe (11) bewirkenden Futterernteprozesskette (13) umfasst, wobei die Futterernteprozesskette (13) eine Vielzahl von Prozessschritten (2) und eine Vielzahl landwirtschaftlicher Arbeitsmaschinen (31) umfasst, welche in einer vorgegebenen Reihenfolge die landwirtschaftliche Arbeitsaufgabe (11) abarbeiten,
**dadurch gekennzeichnet, dass**
das Assistenzsystem (32) weiter eingerichtet ist nach vorgegebenen Strategien (34a..n) die Durchführung der landwirtschaftlichen Arbeitsaufgabe (11) zu optimieren, wobei die vorgegebenen Strategien (34a..n) in dem Assistenzsystem (32) hinterlegt sind und/oder an dieses übergeben werden und wobei das Assistenzsystem (32) mittels der vorgegebenen Strategien (34a..n) optimierte Arbeitsparameter (35) und optimierte Prozessschritte (2) für die Futterernteprozesskette (13) und die sie bildenden landwirtschaftlichen Arbeitsmaschinen (31) generiert.

2. Assistenzsystem (32) zur Optimierung eines Futterernteprozesses (1) nach Anspruch 1, **dadurch gekennzeichnet, dass**
eine vorgegebene Strategie (34a..n) optimierte Arbeitsparameter (35) und optimierte Prozessschritte (2) in Abhängigkeit von den Futterernteprozess (1) beschreibenden Qualitätsparametern (36) ermittelt und die Qualitätsparameter (36) strategieabhängig vorgegeben oder vorgebbar sind.

3. Assistenzsystem (32) zur Optimierung eines Futterernteprozesses (1) nach Anspruch 2, **dadurch gekennzeichnet, dass**
die landwirtschaftlichen Arbeitsmaschinen (31) Arbeitsorgane umfassen und die Arbeitsweise der landwirtschaftlichen Arbeitsmaschinen (31) und der ihnen jeweils zugeordneten Arbeitsorgane durch die Arbeitsparameter (35) beschrieben wird.

4. Assistenzsystem (32) zur Optimierung eines Futterernteprozesses (1) nach einem der vorhergehenden Ansprüche,
**dadurch gekennzeichnet, dass**
das Assistenzsystem (32) zumindest eine Bedieneinrichtung (37) umfasst, wobei die Bedieneinrichtung (37) von zumindest einer Eingabe- und Anzeigeeinheit (38) und einer Speicher- und Datenverarbeitungseinheit (39) gebildet wird und die Bedieneinrichtung (37) einer oder mehreren der landwirtschaftlichen Arbeitsmaschinen (31) und/oder einer stationären Einheit (40) zugeordnet ist und ein oder mehrere der Bedieneinrichtungen (37) eingerichtet sind untereinander Daten (41) auszutauschen.

5. Assistenzsystem (32) zur Optimierung eines Futterernteprozesses (1) nach Anspruch 4, **dadurch gekennzeichnet, dass**
die jeweilige Bedieneinrichtung Daten (41) aus internen und/oder externen Datenquellen (42, 43) bezieht und das vorzugsweise zumindest die der jeweiligen Bedieneinrichtung (37) zugeordnete Speicher- und Datenverarbeitungseinheit (39) in Teilen oder vollständig einer Datencloud (44) zugeordnet ist.

6. Assistenzsystem (32) zur Optimierung eines Futterernteprozesses (1) nach Anspruch 1, **dadurch gekennzeichnet, dass**
der Futterernteprozess (1) einen oder mehrere Prozessschritte (2) umfasst und die Prozessschritte (2) ein oder mehrere der Prozessschritte (2) Entscheidung Erntestart (12), Mähen (3) des Erntegutes (16), Wenden (4) des Erntegutes (16), Schwaden (5) des Erntegutes (16), Schwadernte mittels Feldhäcksler (6), Schwadernte mittels Ballenpresse (7), Schwadernte mittels Ladewagen (9), Aufsammeln und Abtransport von Erntegutballen (8) sowie die Einlagerung (10) von Erntegut (16) umfassen.

7. Assistenzsystem (32) zur Optimierung eines Futterernteprozesses (1) nach einem der vorhergehenden Ansprüche,
**dadurch gekennzeichnet, dass**
der zu optimierende Futterernteprozess (1) als landwirtschaftliche Arbeitsaufgabe (11) beschrieben wird und die Beschreibung der landwirtschaftliche Arbeitsaufgabe (11) die erforderlichen Prozessschritte (2) und die Reihenfolge ihrer Abarbeitung umfasst, wobei die Reihenfolge der Abarbeitung der Prozessschritte (2) die jeweilige Futterernteprozesskette (13) bildet.

8. Assistenzsystem (32) zur Optimierung eines Futterernteprozesses (1) nach einem der vorhergehenden Ansprüche,
**dadurch gekennzeichnet, dass**
die der Futterernteprozesskette (13) zugeordneten landwirtschaftlichen Arbeitsmaschinen (31) in Abhängigkeit von den jeweils erforderlichen Prozessschritten (2) Mähmaschinen, vorzugsweise Mähwerke (15), Heuwerbungsmaschinen (20), vorzugsweise Heuwender, Schwadmaschinen, vorzugsweise Schwader (21), Erntemaschinen, vorzugsweise Feldhäcksler (22), Ballenpresse (25) und/oder Ladewagen (24), Transportfahrzeuge, vorzugsweise Traktoren (14), Transportwagen (23), Pritschenwagen (27), Hubstapler (28) und Verdichtungsfahrzeuge (30) sind.

9. Assistenzsystem (32) zur Optimierung eines Futterernteprozesses (1) nach einem der vorhergehenden Ansprüche,
**dadurch gekennzeichnet, dass**
die Futterernteprozesskette (13) Einlagerungsmedien umfassen, insbesondere Silos (29) und Erntegutballen (26).

10. Assistenzsystem (32) zur Optimierung eines Futterernteprozesses (1) nach Anspruch 1, **dadurch gekennzeichnet, dass**
die in dem Assistenzsystem (32) hinterlegten Strategien (34a..n) von einem Nutzer (33) vorgegeben oder von dem Assistenzsystem (32) vorgeschlagen werden, wobei die hinterlegten Strategien (34a..n) auf den jeweiligen Verwendungszweck (45) des Erntegutes (16) gerichtet sind.

11. Assistenzsystem (32) zur Optimierung eines Futterernteprozesses (1) nach Anspruch 10,
**dadurch gekennzeichnet, dass**
die Verwendungszwecke (45) der hinterlegten Strategien (34a..n) einen oder mehrere der Verwendungszwecke (45)
- Biogasgewinnung (46) aus erntefrischem oder siliertem Erntegut (16),
- Tierfütterung (47) aus erntefrischem oder siliertem Erntegut (16), wobei die Tierfütterung (47) insbesondere die Rindermast und die Milchgewinnung umfasst,
- Einlagerung (48) des Ernteguts (16) als Heu
umfassen.

12. Assistenzsystem (32) zur Optimierung eines Futterernteprozesses (1) nach einem der vorhergehenden Ansprüche,
**dadurch gekennzeichnet, dass**
jede der Strategien (34a..n) einen oder mehrere Qualitätsparameter (36) umfasst, wobei jeder der Qualitätsparameter (36) das Arbeitsergebnis der jeweiligen Futterernteprozesskette (13) definiert und ein oder mehrere der Qualitätskriterien (49)
- Kraftstoffbedarf (49a), vorzugsweise ein minimaler Kraftstoffbedarf,
- Durchsatz (49b), vorzugsweise ein maximaler Durchsatz,
- Gesamtkosten (49c), vorzugsweise minimale Gesamtkosten,
- Erntegutqualität (49d), vorzugsweise eine maximale Erntegutqualität,
- Erntegutverlust (49e), vorzugsweise ein minimaler Erntegutverlust,
- Energiegehalt (49f) des Erntegutes (16), vorzugsweise ein maximaler Energiegehalt,
- Verschmutzungsgrad (49g), vorzugsweise ein minimaler Verschmutzungsgrad,
- Feuchte (49h) des Erntegutes (16), vorzugsweise eine an den Verwendungszweck (45) angepasste optimierte Feuchte
- Erntegutertrag (49i), vorzugsweise ein maximaler Erntegutertrag
umfasst.

13. Assistenzsystem (32) zur Optimierung eines Futterernteprozesses (1) nach einem der vorhergehenden Ansprüche,
**dadurch gekennzeichnet, dass**
Grenzwerte (53) für die Qualitätsparameter (36) und/oder für den Qualitätsparametern (36) zugeordnete Qualitätskriterien (49) definiert werden und die Grenzwerte (53) in dem Assistenzsystem (32) hinterlegt sind oder an dieses übergeben werden.

14. Assistenzsystem (32) zur Optimierung eines Futterernteprozesses (1) nach einem der Ansprüche 11 und 12,
**dadurch gekennzeichnet, dass**
der Verwendungszweck (45) der hinterlegten Strategie (34a..n) die Verwendung des Erntegutes (16) als erntefrisches Erntegut (16) oder als Silage (50) für die Biogasgewinnung (46) ist und wobei
der Qualitätsparameter (36) das Qualitätskriterium Feuchte (49h) umfasst und für die Feuchte ein Wertebereich von 55 .. 70 % vorgegeben ist,
ein Arbeitsparameter (35) die Schnittlänge des Erntegutes (16) ist und die Schnittlänge vorzugsweise in einem Bereich von 4 ... 10 mm liegt,
ein Arbeitsparameter (35) der Schnittzeitpunkt ist und der Schnittzeitpunkt so gewählt wird, dass eine hohe Energiekonzentration im Erntegut (16) erreicht wird, eine hohe Verdichtung des Erntegutes (16) möglich und die Vermeidung von Fehlgärungen erreicht wird,
ein Arbeitsparameter (35) die Schnitthöhe eines Mähwerks (15) umfasst und die Schnitthöhe in einem Bereich von 50..80 mm vorgeschlagen wird.

15. Assistenzsystem (32) zur Optimierung eines Futterernteprozesses (1) nach einem der Ansprüche 11 und 12,
**dadurch gekennzeichnet, dass**
der Verwendungszweck (45) der hinterlegten Strategie (34a..n) die Verwendung des Erntegutes (16) als erntefrisches Erntegut (16) oder als Silage (50) für die Tierfütterung (47), insbesondere die Rindermast und die Milchgewinnung ist und wobei das Qualitätskriterium Feuchte (49h) zwischen 55 und 70 % liegt, ein Arbeitsparameter (35) die Zugabe einer Menge Siliermittel umfasst, die die Bildung von Milchsäure fördert, ein Arbeitsparameter (35) die Schnittlänge des Erntegutes (16) ist und die Schnittlänge vorzugsweise in einem Bereich von 4 ... 25 mm liegt, wobei die Schnittlänge umso kürzer vorgeschlagen wird je nasser das Erntegut (16) ist, ein Arbeitsparameter (35) die Schnitthöhe eines Mähwerks (15) umfasst und die Schnitthöhe in einem Bereich von 50..80 mm vorgeschlagen wird.

16. Assistenzsystem (32) zur Optimierung eines Futterernteprozesses (1) nach Anspruch 15,
**dadurch gekennzeichnet, dass**
der Trockenmassegehalt des Erntegutes (16) ermittelt wird, vorzugsweise durch Analyse des Erntegutes (16) und die Zugabe der Menge an Siliermittel in Abhängigkeit vom Trockenmassegehalt erfolgt, wobei vorzugsweise für einen optimalen Trockenmassegehalt eine optimale Anwelkzeit ermittelt wird.

17. Assistenzsystem (32) zur Optimierung eines Futterernteprozesses (1) nach einem der Ansprüche 11 und 12,
**dadurch gekennzeichnet, dass**
der Verwendungszweck (45) der hinterlegten Strategie (34a..n) die Verwendung des Erntegutes (16) als Heu ist und wobei das Qualitätskriterium Feuchte (49h) maximal 15% beträgt.

18. Assistenzsystem (32) zur Optimierung eines Futterernteprozesses (1) nach einem der vorhergehenden Ansprüche,
**dadurch gekennzeichnet, dass**
die Optimierung der Prozessschritte (2) das Weglassen oder Wiederholen von Prozessschritten (2) vorschlägt, wobei das Wiederholen oder Weglassen des Prozessschritts (2) Wenden (4) des Erntegutes (16) und/oder das Weglassen des Crackens des Erntegutes (16) im Prozessschritt (2) Mähen (3) umfasst, wenn zumindest das Qualitätskriterium Feuchte (49h) entweder noch nicht oder bereits in einem zulässigen Bereich liegt.

19. Assistenzsystem (32) zur Optimierung eines Futterernteprozesses (1) nach einem der vorhergehenden Ansprüche,
**dadurch gekennzeichnet, dass**
die Optimierung der Arbeitsparameter (35) die Optimierung der Rechhöhe in den Prozessschritten (2) Wenden (4) und Schwaden (5) umfasst und die Rechhöhe umso höher vorgeschlagen wird, je schlechter das Qualitätskriterium Verschmutzungsgrad (49g) ist.

20. Assistenzsystem (32) zur Optimierung eines Futterernteprozesses (1) nach einem der vorhergehenden Ansprüche,
**dadurch gekennzeichnet, dass**
die Optimierung der Arbeitsparameter (35) Schnitthöhe und Schnittzeitpunkt im Prozessschritt (2) Mähen (3) zumindest in Abhängigkeit von einem oder mehreren der Qualitätskriterien Verschmutzungsgrad (49g) und Feuchte (49h) erfolgt, wobei die Schnitthöhe umso höher und der Schnittzeitpunkt umso später gewählt wird je schlechter die Qualitätskriterien Verschmutzungsgrad (49g) und Feuchte (49h) sind.

21. Assistenzsystem (32) zur Optimierung eines Futterernteprozesses (1) nach einem der vorhergehenden Ansprüche,
**dadurch gekennzeichnet, dass**
das Assistenzsystem (32) eingerichtet ist, eine Änderung von Qualitätsparametern (36) und zugehörigen Qualitätskriterien (49) einer aktivierten Strategie (34a..n) oder einen Wechsel einer aktivierten Strategie (34a..n) vorzuschlagen, wenn das Assistenzsystem (32) erkennt, dass die Qualitätsparameter (36) und/oder die jeweils zugeordneten Qualitätskriterien (49) einer gewählten Strategie (34a..n) nicht erreichbar sind, insbesondere bei Maschinenausfall und/oder einer bevorstehenden Schlechtwetterphase.

22. Assistenzsystem (32) zur Optimierung eines Futterernteprozesses (1) nach einem der vorhergehenden Ansprüche,
**dadurch gekennzeichnet, dass**
das Assistenzsystem (32) eingerichtet ist in Abhängigkeit von Bedingungen eines vorhergehenden Prozessschritts (2) Art und Umfang der folgenden Prozessschritte (2) der aktivierten Prozessstrategie (34a..n) zu definieren.
